# EUROPÄISCHE PATENTANMELDUNG

(11) **EP 0 639 422 A2**
(43) Veröffentlichungstag der Anmeldung: **22.02.1995**
(21) Anmeldenummer: 94109369.2
(22) Anmeldetag: 17.06.1994
(51) Int. Cl.: B23K 3/06, B23K 3/08

(54) **Vorrichtung zum Auftragen von Lotpasten und Flussmitteln**

(30) Priorität: 19.08.1993 DE 9312422 U
(71) Anmelder: DEGUSSA AKTIENGESELLSCHAFT, D-60311 Frankfurt (DE)
(72) Erfinder: Greinemann, Franz, D-63486 Bruchköbel (DE); Barbehön, Jörg, Dr., D-64285 Darmstadt (DE); Kinzel, Josef, D-60486 Frankfurt/M. (DE); Krappitz, Harald, Dr., D-63457 Hanau (DE); Cadorin, Günter, D-63450 Hanau (DE)

(57) **Zusammenfassung**

Zum Auftragen von Lotpasten und Flußmitteln auf die Enden von Kupferrohren beim Weichlöten auch an relativ unzugänglichen Stellen bei der Rohrinstallation verwendet man eine Vorrichtung, die aus Handgriff und Auftragskopf besteht. Im Handgriff ist ein Vorratsbehälter für die Pasten und eine Fördereinrichtung eingebaut, die die Paste zum Auftragselement befördert, das am Auftragskopf befestigt ist.

## Beschreibung

Die Erfindung betrifft eine Vorrichtung zum Auftragen von Lotpasten und Flußmittelpasten auf die zu verbindenen Teile vor dem Weichlöten, insbesondere auf die Enden von Kupferrohren in der Rohrinstallationstechnik, bestehend aus einem Auftragskopf zum Verteilen der Pasten auf den Teilen und einem mit dem Auftragskopf verbundenen Handgriff.

In der Rohrinstallationstechnik werden Verbindungen zwischen Kupferrohren und Fittings durch Weichlöten hergestellt. Hierfür werden Weichlotpasten oder Flußmittelpasten eingesetzt, die vor dem Lötvorgang gleichmäßig auf der Außenseite des Rohrendes, über welches der Fitting geschoben wird, aufgetragen werden müssen.

In der Praxis wird der Auftrag dieser Pasten üblicherweise manuell mittels Pinsel, Spachtel oder Lappen vorgenommen. Die Bevorratung der Paste erfolgt üblicherweise in einem verschließbaren Behältnis, zum Beispiel in Tuben oder Dosen. Erfahrungsgemäß erzielt man mit einem Pinsel das beste Auftragsergebnis in bezug auf Gleichmäßigkeit der Pastenschicht über den Rohrumfang.

Nachteilig an dieser Auftragstechnik ist die umständliche Anwendung,
da das Auftraginstrument zur Aufnahme der Paste im Falle einer Dose in das Behältnis eingetaucht werden muß und im Falle einer Tube an die Tubenöffnung gehalten werden muß und damit in den meisten Anwendungsfällen eine beidhändige Tätigkeit gefordert ist. Weiterhin nachteilig ist der große Zeiaufwand zur Durchführung des Auftrags, da zum Auftragen einer dünnen gleichmäßig dicken Pastenschicht auf den Rohrumfang von Hand bei in der Installationstechnik gängigen Rohrdurchmessern mehrmalig Paste aufgenommen und aufgetragen werden muß.

In der US 4,349,928 wird eine Vorrichtung beschrieben, mit der Lotpaste automatisiert auf Kupferrohrenden aufgebracht werden kann, indem man das Rohrende in die Aufnahmebohrung eines für den jeweiligen Rohrdurchmesser passenden Adapters steckt, wobei die Innenwand der Adapterbohrung siebförmig mit Löchern versehen ist, durch die bei Betätigung der Vorrichtung automatisch Paste auf den Rohrumfang aufgetragen wird, wobei die Pastenförderung durch einen motorgetriebenen Verdrängerkolben erfolgt.

Nachteilig an dieser Vorrichtung ist, daß für jeden Rohrdurchmesser ein passender Adapter am Gerät vorhanden oder auswechselbar sein muß. Nachteilig ist weiterhin, daß das Gerät aufgrund seiner Baugröße nicht bei an der Wand vormontierten Rohren angewendet werden kann.

Es war daher Aufgabe der vorliegenden Erfindung eine Vorrichtung zum Auftragen von Lotpasten und Flußmittelpasten auf die zu verbindenden Teile vor dem Weichlöten zu entwickeln,
insbesondere auf die Enden von Kupferrohren in der Rohrinstallationstechnik, bestehend aus einem Auftragskopf zum Verteilen der Pasten auf den Teilen und einem mit dem Auftragskopf verbundenen Handgriff. Diese Vorrichtung sollte universell auch an schwer zugänglichen Stellen einsetzbar sein und einhändig betrieben werden können, wobei eine große Zahl von Einsätzen ohne jeweiliges Nachbenetzen des Auftragskopfes aus einer Dose oder Tube ermöglicht werden sollte.

Dies Aufgabe wird erfindungsgemäß dadurch gelöst, daß der Handgriff hohl ausgebildet ist und einen Vorratsbehälter für die Lotpaste oder Flußmittelpaste enthält und daß im Handgriff eine Fördereinrichtung angeordnet ist, die die Pasten bei Betätigung eines entsprechenden Elements vom Vorratsbehälter in den Auftragskopf befördert, der mit einem Auftragelement verbunden ist.

Vorzugsweise wird als Handgriff ein Pastenbehälter verwendet und das Auftragselement als Pinsel ausgebildet.

Der Handgriff kann als Gehäuse mit verschließbarem Deckel ausgeführt sein, in das die Pasten eingefüllt werden, oder in das eine mit Paste gefüllte Tube oder Kartusche eingebracht wird. Vorzugsweise stellt der Pastenbehälter selbst den Handgriff dar.

Die Förderung der Pasten kann z.B. mittels einer im Handgriff integrierten Kolbenpumpe,
eines mechanisch bewegten Kolbens oer auf der Basis eines mechanischen Unterdrucksystems mit Schleppkolben ausgeführt werden. Die Auslösung des Fördervorganges kann beispielsweise durch Betätigung eines am Handgriff oder Auftragskopf angebrachten Drucktasters oder Hebels erfolgen.

Der Auftragskopf kann über eine Klemm-, Steck- oder Schraubverbindung oder fest mit dem Handgriff verbunden sein. Er ist in seiner Form so ausgebildet, daß das Auftragselement auch in enge Zwischenräume geführt werden kann. Vorzugsweise sitzt das Auftragselement am Ende eines abgekröpften Auslegers des Auftragskopfes.

Das Auftragselement kann als Rolle, Schwamm, Spachtel oder Düse ausgefüht sein. Vorzugsweise ist das Auftragselement als Pinsel ausgebildet, mit Zuführung der Paste aus dem Handgriff über den Auftragskopf an die Pinselborsten über einen oder mehrere Kanäle, deren Austrittsöffnungen sich an den Borstenwurzeln befinden.

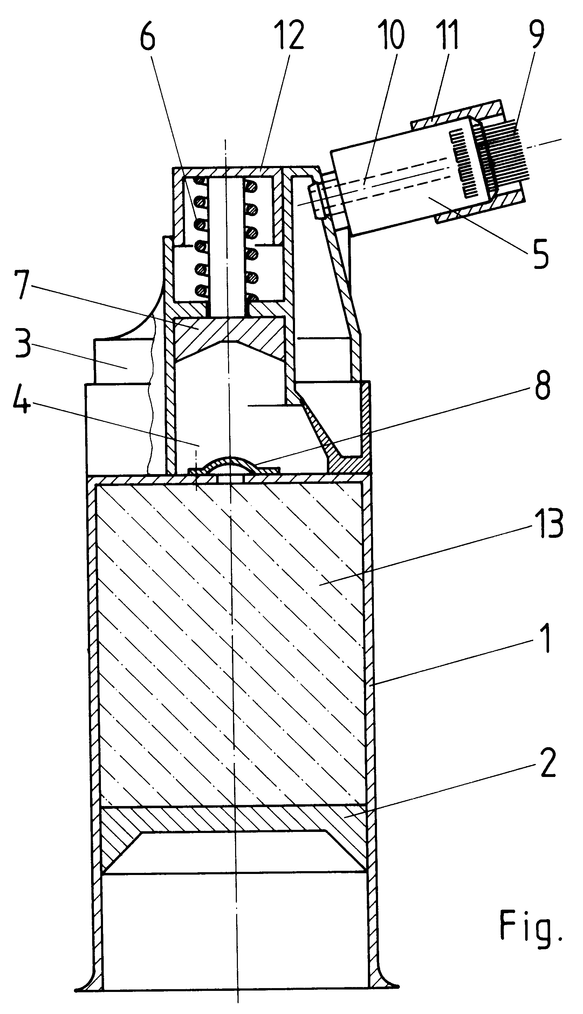

Die Abbildung zeigt schematisch eine beispielhafte Ausführungsform der erfindungsgemäßen Vorrichung zum Auftragen von Pasten.

Der Handgriff (1) in zylindrischer Ausführung stellt gleichzeitig den Vorratsbehälter (13) für die Paste dar. Er ist an der Unterseite durch einen Deckel verschlossen, der in diesem Fall als Schleppkolben (2) ausgebildet ist. Die Paste wird durch Druck einer Taste (12) im Auftragskopf (3), zum Auftragselement (5) gefördert, wodurch eine Verdrängung des Pastenvolumens aus der Druckkolbenkammer (4) bewirkt wird und die Pastenfördermenge über den Druckweg reguliert werden kann. Durch die Reduzierung des Pastenvolumens in der Druckkolbenkammer (4) entsteht bei der durch die Druckfeder (6) bewirkte Rückstellung des Druckkolbens (7) ein Unterdruck, der durch Pastennachfuhr aus dem Vorratsbehälter (13) durch das nur in dieser Richtung durchlässige Membranventil (8), ausgeglichen wird, was gleichzeitig die selbstätige Bewegung des Schleppkolbens (2) in Richtung Auftragskopf (3) nach sich zieht.

Als Auftragselement (5) ist ein runder Pinsel (9) am Auftragskopf (3) befestigt. Die Pastenzufuhr erfolgt über einen einzelnen, in der Pinselmitte angeordneten Kanal (10). Die Pinselborsten sind von einer Hülse (11) umgeben, die das seitliche Austreten der Paste verhindert und eine gleichmäßige Verteilung der Paste bei der Förderung an die Borstenspitzen unterstützt.

## Patentansprüche

1. Vorrichtung zum Auftragen von Lotpasten und Flußmittelpasten auf die zu verbindenden Teile vor dem Weichlöten, insbesondere auf die Enden von Kupferrohren in der Rohrinstallationstechnik, bestehend aus einem Auftragskopf zum Verteilen der Pasten auf den Teilen und einem mit dem Auftragskopf verbundenen Handgriff,
**dadurch gekennzeichnet,**
daß der Handgriff (1) hohl ausgebildet ist und einen Vorratsbehälter (13) für die Lotpaste oder Flußmittelpaste enthält und daß im Handgriff (1) eine Fördereinrichtung (2, 4, 6, 7) angeordnet ist, die die Pasten bei Betätigen eines entsprechenden Elements (12) vom Vorratsbehälter (13) in den Auftragskopf (3) befördert, der mit einem Auftragselement (5) verbunden ist.

2. Vorrichtung nach Anspruch 1,
**dadurch gekennzeichnet,**
daß als Handgriff (1) ein Pastenbehälter verwendet wird.

3. Vorrichtung nach Anspruch 1,
**dadurch gekennzeichnet,**
daß als Auftragselement (5) ein Pinsel verwendet wird.
